# FASCICULE DE BREVET EUROPEEN

(11) **EP 0 541 689 B1**
(45) Date de publication et mention de la délivrance du brevet: **18.05.1994**
(21) Numéro de dépôt: 91914854.4
(22) Date de dépôt: 02.08.1991
(51) Int. Cl.: B62D 1/24, B62D 15/00, B66F 9/06

(54) **DISPOSITIF DE POSITIONNEMENT A L'ARRET POUR CHARIOT DE MANUTENTION**
STOP-POSITIONIERVORRICHTUNG FÜR EIN FLURFÖRDERFAHRZEUG
STATIONARY POSITION ADJUSTMENT DEVICE FOR HANDLING TROLLEY

(30) Priorité: 03.08.1990 FR 9010164
(43) Date de publication de la demande: 19.05.1993
(73) Titulaire: JUAN, Richard, F-69360 Saint Symphorien d'Ozon (FR)
(72) Inventeur: JUAN, Richard, F-69360 Saint Symphorien d'Ozon (FR)
(74) Mandataire: Perrier, Jean-Pierre
(86) Numéro de dépôt international: FR9100645
(87) Numéro de publication internationale: WO9202396

(56) Documents cités:
- EP-A- 0 343 804
- FR-A- 2 456 653
- US-A- 4 846 073

## Description

### "Dispositif de positionnement à l'arrêt pour chariot de manutention".

L'automatisation de plus en plus poussée des moyens de production impose d'envisager l'automatisation des moyens de manutention des produits entre les postes de fabrication, et en particulier d'automatiser les chariots de manutention transportant les pièces usinées entre des machines dispersées, ou entre les moyens de fabrication et un lieu d'assemblage, de stockage ou de conditionnement.

Les chariots de ce type sont nécessairement autonomes, c'est à dire porteurs de batteries assurant leur alimentation et sont associés à des moyens de conduite, tel que filoguidage, guidage optronique, repérage trigonométrique par laser ou autres, réagissant sur les moyens de commande de leurs moyens moteurs.

En général, le déplacement d'un chariot autonome s'effectue à une vitesse stable, (de l'ordre de 30 à 120 mètres par minute), et l'arrêt est précédé d'une phase de décélération jusqu'à une vitesse lente de positionnement final. Cette technique, associée à une bonne maîtrise, d'une part, des moyens de détection de la position longitudinale du chariot, et d'autre part, des moyens moteurs agissant sur les moyens d'entrainement en translation de ce chariot, permet d'obtenir une précision longitudinale de l'ordre de plus ou moins un millimètre qui est satisfaisante ou au moins suffisante pour ne pas perturber un positionnement de précision ultérieur. La précision transversale, c'est à dire mesurée perpendiculairement à la direction de déplacement, est bien moins bonne car elle dépend, en autres, des imperfections de surface du sol, mais aussi de la planéité de celui-ci. Il en résulte que, même avec un chariot d'excellentes qualités constructives et fonctionnelles, les seules imperfections du sol provoquent un déplacement transversal de la trajectoire du chariot par rapport à sa trajectoire théorique. Ce déplacement, dénommé dérive, peut être de l'ordre de plusieurs centimètres pour un parcours de plusieurs mètres. Une dérive de cette valeur est inacceptable et doit être corrigée à défaut de quoi, à l'occasion de chaque changement de direction, même avec une rotation angulaire précise, elle modifie le cap du chariot et accroît l'imprécision de ce positionnement, c'est a dire la dérive entre son positionnement transversal réel et son positionnement théorique.

Une solution consiste à intervenir sur les roues directrices du chariot pour effectuer des corrections de cap, vérifiées ensuite par détection du positionnement, mais cela conduit à une succession permanente d'opérations de correction et de détection et n'est pas applicable aux chariots ne comportant pas de roues directrices, mais d'autres moyens permettant un pivotement sur place.

La présente invention a pour but de fournir un dispositif de positionnement pour chariot de manutention, autonome ou non, permettant, en des points particuliers de sa trajectoire, de l'amener rapidement à sa position théorique ou à la position théorique, de transfert de la pièce ou charge qu'il porte.

Ce dispositif, applicable à un chariot comportant un châssis muni de moyens de réception d'une charge et de moyens d'entrainement au moins en translation longitudinale, comprend au moins un doigt centreur qui, en forme de pyramide de section polygonale, d'axe vertical et présentant des arêtes convergeant vers le bas, est porté par des moyens assurant son calage en rotation par rapport au châssis et est relié à des moyens aptes à le déplacer entre une position de transport, dans laquelle il est au-dessus du sol, et une position de positionnement, dans laquelle il est engagé dans une empreinte de mêmes forme et dimensions que lui et ménagée dans une bague disposée dans le sol, cette empreinte étant positionnée dans le sol de manière que son axe vertical passe par l'intersection des axes longitudinaux et transversaux d'un point de référence de la trajectoire théorique du chariot et que, au moins l'une de ses faces soit perpendiculaire à cette trajectoire théorique.

Ainsi, lorsque le chariot est arrêté dans une zone nécessitant un repositionnement, le doigt de centrage est abaissé en direction de l'empreinte disposée dans la zone. Ses faces pentues rencontrent celles de l'empreinte qui, par leur fixité, guident transversalement le doigt jusqu'à ce que son axe coïncide avec celui de l'empreinte. Ce positionnement n'est rendu possible que grâce au calage angulaire du doigt par rapport au châssis du chariot et à la mobilité dans le plan horizontal du chariot, alors équipé de roues directrices à pivots.

Dans une forme d'exécution applicable plus spécialement aux chariots ne comportant pas de roues directrices, ou possédant des roues directrices ayant une faible capacité à se mouvoir transversalement au poste de positionnement, le dispositif comprend, d'une, part des moyens liés au châssis pour assurer, dans la phase de positionnement, un déplacement vertical vers le haut au moins du châssis et de ses moyens d'entrainement en translation longitudinale, et, d'autre part, des moyens tolérant un déplacement transversal du châssis, en position soulevée.

Avec cet agencement, l'introduction du doigt dans l'empreinte n'est effectuée qu'après soulèvement du châssis du chariot pour éliminer tout problème de frottement entre le sol et les roues, ou tout autre moyen d'entrainement en translation. De la sorte, lors de l'introduction du doigt dans l'empreinte et grâce au moyen tolérant un déplacement transversal du châssis, les forces exercées par les faces de l'empreinte sur celles du doigt suffisent pour déplacer le châssis et positionner son axe vertical en coïncidence avec celui théorique, formalisé par l'empreinte.

L'invention concerne aussi les chariots à roues non directrices et dans lesquelles les moyens assurant les déplacements verticaux du châssis sont constitués par des moyens assurant sa rotation sur place, ces derniers moyens comprenant, au moins, un coulisseau mobile dans des glissières verticales du châssis, des moyens moteurs aptes à déplacer ce coulisseau, verticalement et dans les deux sens, et un plateau inférieur lié au coulisseau et portant une couronne qui, libre en rotation, est liée à des moyens d'entrainement en rotation et est apte à venir en appui sur le sol.

Dans cette forme d'exécution, le doigt centreur est monté libre en rotation sur un arbre avec lequel il est monté coulissant dans un palier vertical, tandis que, d'une part, le palier précité est interposé entre le coulisseau, dont il est solidaire, et le plateau, auquel il est lié avec possibilité de translation transversale, au-moins dans une direction, que, d'autre part, l'ensemble doigt centreur-arbre coulissant est attelé à des moyens aptes à le déplacer verticalement par rapport au palier, au moins dans la phase de positionnement du châssis, et que, de plus, le plateau porte un ensemble de précentrage composé d'un disque de portage, monté flottant verticalement par rapport au plateau, et d'un noyau de précentrage, monté flottant radialement par rapport au disque et muni d'un nez inférieur en alignement avec une empreinte supérieure, nez et empreinte ayant les mêmes forme et dimensions que le doigt centreur.

Avec ce dispositif, pendant la descente vers le bas du plateau pour amener la couronne d'appui sur le sol, l'ensemble de précentrage se positionne librement sur l'empreinte, avant d'être calé en translation par le plateau reposant sur lui. Ensuite, alors que la couronne est en appui sur le sol et pendant l'élévation du châssis, le doigt de centrage est descendu en direction de l'empreinte de l'ensemble de précentrage. Le contact de ses faces avec celles de cette empreinte de précentrage provoque le déplacement du châssis par rapport à la couronne et au plateau et la mise en coïncidence de l'axe de référence du châssis avec celui de l'empreinte de précentrage, mais aussi avec celui de l'empreinte de centrage.

Après ce positionnement, le châssis peut être rabaissé immédiatement et le coulisseau relevé, car alors la dérive transversale est corrigée.

Le chariot peut aussi, après positionnement et avant abaissement, être pivoté de l'angle désiré, par rotation autour de l'axe de référence et par entrainement avec appui sur la couronne, alors décentrée, sans que cela modifie le positionnement précis du chariot.

Il apparait donc, quelle que soit sa forme d'exécution, que le dispositif selon l'invention permet de rattraper parfaitement la dérive transversale d'un chariot, mais aussi sa dérive longitudinale, tant en cours de changement de direction, qu'à l'arrêt dans une zone de transfert, et avec une précision qui est indépendante de la masse de la charge portée.

D'autres caractéristiques et avantages ressortiront de la description qui suit en référence au dessin schématique annexé représentant à titre d'exemples non limitatifs, plusieurs formes d'exécution de ce dispositif.
Figure 1 est une vue de côté en coupe transversale montrant, de façon schématique, une première forme d'exécution du dispositif dans le cadre de son application à un chariot muni de roues articulées autour d'un pivot vertical,
Figure 2 est une vue partielle en perspective montrant, à échelle agrandie, le doigt centreur et l'empreinte du dispositif,
Figure 3 est une vue en plan par dessus illustrant le principe de fonctionnement du doigt centreur et de l'empreinte,
Figures 4 à 6 sont des vues schématiques, en coupe partielle, montrant une forme d'exécution du dispositif dans diverses positions, dans le cas de son application à un chariot muni de roues non articulées dans le plan vertical,
Figure 7 est une vue en perspective montrant l'application du dispositif à un chariot autonome porte coil, à rotation sur place,
Figure 8 est une vue de côté schématique en coupe transversale montrant les éléments essentiels du chariot de figure 7,
Figures 9 à 12 sont des vues partielles en coupe transversale suivant IX-IX de figure 8 montrant, à échelle agrandie, les éléments du dispositif dans différentes phases de son fonctionnement,
Figure 13 est une vue de côté en coupe longitudinale similaire à la figure 8 mais montrant, plus en détails, les éléments constitutifs du dispositif,
Figures 14 et 15 sont des vues en plan par dessus du chariot des figures 7 à 13 mettant en évidence le rattrapage de dérive, avec et sans rotation.

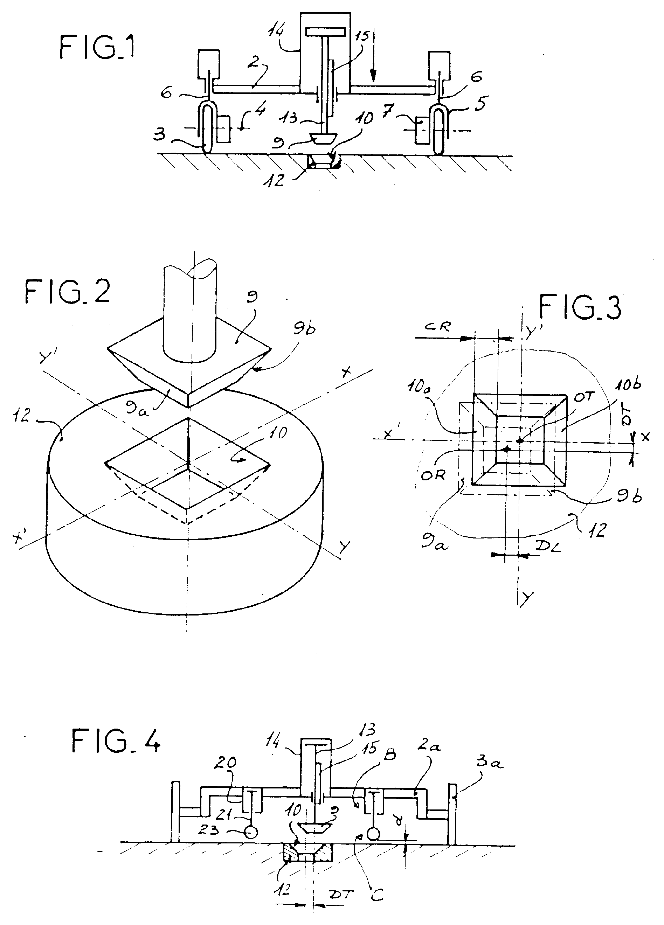

Le chariot de manutention représenté à la figure 1 est composé d'un châssis 2 apte à supporter une charge, avec l'aide de tous moyens appropriés, et dont les roues 3 sont articulées autour d'un axe horizontal 4 porté par une chape 5. Celle-ci est montée libre en rotation dans le châssis sur un pivot vertical 6. Ce chariot peut être à déplacement manuel ou à déplacement motorisé, cas dans lequel au moins certaines de ces roues sont munies de moyens moteurs 7 aptes à entrainer en rotation leur axe 4. De même, les pivots 6 peuvent être montés libres en rotation par rapport au châssis ou être associés à des moteurs 8 provoquant leur rotation, sous l'action d'une commande, non représentée.

Selon l'invention, ce chariot est muni de moyens de positionnement à l'arrêt, moyens composés essentiellement de deux éléments, à savoir un doigt centreur 9 et au moins une empreinte de centrage 10. La figure 2 montre que le doigt centreur présente, au moins à son extrémité, la forme d'une pyramide de section polygonale et, plus particulièrement, la forme d'une pyramide tronquée de section carrée. L'empreinte 10, qui est ménagée dans une bague 12 calée dans le sol, présente les mêmes formes et dimensions que le doigt centreur 9. La bague 12 est calée dans le sol de manière que l'axe vertical de l'empreinte 10, représenté par le point OT à la figure 3, soit à l'intersection des axes longitudinaux X'X et Y'Y d'un point de référence de la trajectoire du chariot et que l'une des faces de cette empreinte, par exemple, celles 10a et 10b à la figure 3, soient perpendiculaires à la trajectoire de déplacement théorique X'X de ce chariot.

Dans la forme d'exécution de la figure 1, le doigt centreur 9 est calé à l'extrémité de la tige 13 d'un vérin dont le corps 14 est fixé au châssis 2. Cette tige 13 est associée à des moyens, tels qu'une clavette 15, calant en rotation le doigt centreur, de manière que ce doigt soit toujours dans la même position par rapport au châssis 2, c'est à dire possède des faces transversales 9a-9b toujours disposées perpendiculairement à l'axe longitudinal réel du chariot.

Ainsi, lorsque le chariot s'arrête dans la zone de positionnement avec son doigt centreur 9 au-dessus de l'empreinte 10, et comme le montre, en traits mixtes, la figure 3, en raison de la dérive transversale DT et de la dérive longitudinale DL, le point OR correspondant à l'axe longitudinal du doigt centreur 9 est décalé par rapport au point théorique OT. Pour positionner précisément le chariot, il suffit, après avoir éventuellement rendu libres en rotation les pivots 6 des roues 4, de commander le déplacement vers le bas du doigt centreur 9 en direction de l'empreinte 10. Dès que deux des faces du doigt viennent en contact avec celles correspondantes de l'empreinte, ces dernières, en raison de leur fixité, exercent sur les faces du doigt des forces perpendiculaires tendant à ramener l'axe vertical de ce doigt en coïncidence avec celui de l'empreinte et provoquant ainsi, grâce au montage à pivot des roues 6, le déplacement du châssis 2 dans le sens de la correction des écarts de positionnement. Dès que le doigt centreur 9 est engagé, sans aucun jeu périphérique dans l'empreinte 10, le centrage ou repositionnement du chariot 2 est assuré et il peut être alors procédé à un nouveau déplacement ou à une opération de transfert, consistant à déposer sur le chariot une charge provenant d'une machine ou d'un organe de stockage, ou à déposer sur une machine ou un organe de stockage, une charge jusqu'alors sur le chariot.

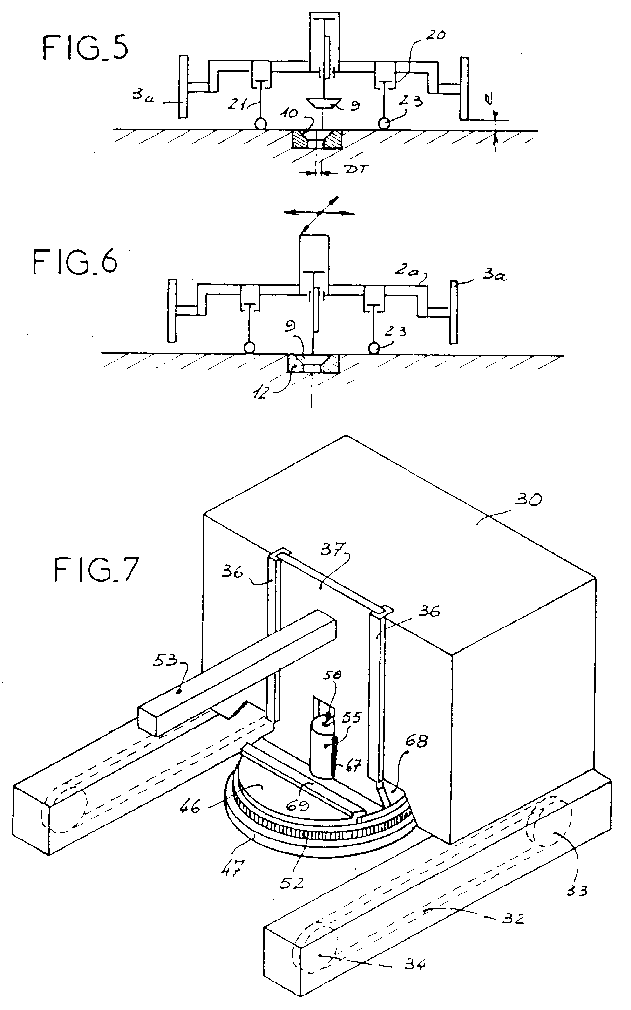

Les figures 4 et 6 montrent l'application du dispositif de positionnement à un chariot dont le châssis 2a et muni de moyens de translation longitudinale et, par exemple de roues 3a montées libres en rotation autour d'axes transversaux 4, mais sans possibilité de pivotement autour d'un axe vertical. Dans ces conditions pour permettre les mouvements de translation du châssis 2a pendant l'engagement du doigt de centrage dans l'empreinte 10, le dispositif de positionnement précédemment décrit est associé à des moyens B aptes à déplacer verticalement le châssis et à des moyens C tolérant un déplacement transversal de ce châssis.

Dans cette forme d'exécution, les moyens B sont constitués par des vérins dont les corps 20 sont calés au châssis dont les tiges 21 sont déplaçables verticalement pour venir en contact avec le sol. Quant aux moyens C, ils sont constitués, par exemple, par des moyens de roulement, tels que des roulettes 23 montées en rotation autour d'un pivot vertical à l'extrémité des tiges 21 des vérins.

En position de repos, et comme montré à la figure 4, les tiges 21 des vérins sont rétractées en position haute de manière que les roulettes 23 soient séparées du sol par une distance d.

Au poste de positionnement, et après arrêt du chariot, les vérins sont alimentés de manière que les tiges 21 descendent verticalement vers le bas en direction du sol. Dès que les roulettes 23 ont pris contact avec le sol, le mouvement des vérins est prolongé jusqu'à ce que les roues 3a, ou les autres moyens de translation longitudinale du chariot, soient soulevés par rapport au sol d'une valeur e, montrée figure 5. C'est seulement à partir de ce moment que, comme le montre la figure 6, le dispositif de positionnement est actionné afin que le doigt de centrage 9 pénètre dans l'empreinte 10 et assure le repositionnement du chariot par rapport à l'axe vertical de référence. Durant cette phase de positionnement, le châssis 2a du chariot peut, grâce aux roulettes 23, subir tout déplacement transversal sur les axes X'X et Y'Y pour procéder au recentrage de la charge qu'il porte.

Bien entendu, après l'opération de positionnement, les moyens B sont actionnés pour qu'ils reviennent à leur position d'origine, représentée à la figure 4, en ramenant les roues 3a en contact avec le sol.

La forme d'exécution décrite en référence aux figures 7 à 15 concerne l'application du dispositif de positionnement à un chariot autonome ne comportant pas de roues directrices mais des moyens permettant de le faire pivoter sur place.

Ce chariot est donc composé d'un châssis désigné de façon générale par 30 et dont les moyens d'entrainement en translation longitudinale sont constitués par des chenilles latérales 32 allant de roues motrices 33 à des roues de renvoi 34. Les roues motrices sont entrainées par un moteur 35 porté par le châssis 30. Ce châssis porte également, mobile verticalement dans des glissières 36, un coulisseau 37 qui est relié à des moyens moteurs aptes à lui communiquer un déplacement vertical dans les deux sens. Dans la forme d'exécution représentée, ces moyens moteurs sont constitués par un moteur 38 entrainant par une transmission par poulies et courroies 39, une vis 40 montée libre en rotation dans deux platines 42 et 43 liées au châssis. La vis 40 coopère avec un écrou 44 qui, lié au coulisseau par une traverse 45, est en conséquence calé en rotation. Le coulisseau 37 porte un plateau 46 par rapport auquel est montée libre en rotation une couronne 47 qui, comme cela sera précisé plus loin, vient en appui sur le sol. Un moteur électrique 48, porté par un support lié au plateau 46, est apte à entrainer un pignon 50, attaquant une couronne dentée 52 ménagée à la périphérie de la couronne 47.

Le chariot représenté aux figures 7 à 15 étant plus spécialement destiné à transporter des coils, le coulisseau 37 est solidaire d'un éperon horizontal 53 saillant vers l'avant du chariot. Il est bien évident toutefois que l'invention s'applique à un chariot pouvant comporter tout autre moyen de prise ou de transport de charge, tel qu'un plateau ou des fourches, pourvu que ces éléments soient fixés au coulisseau 37.

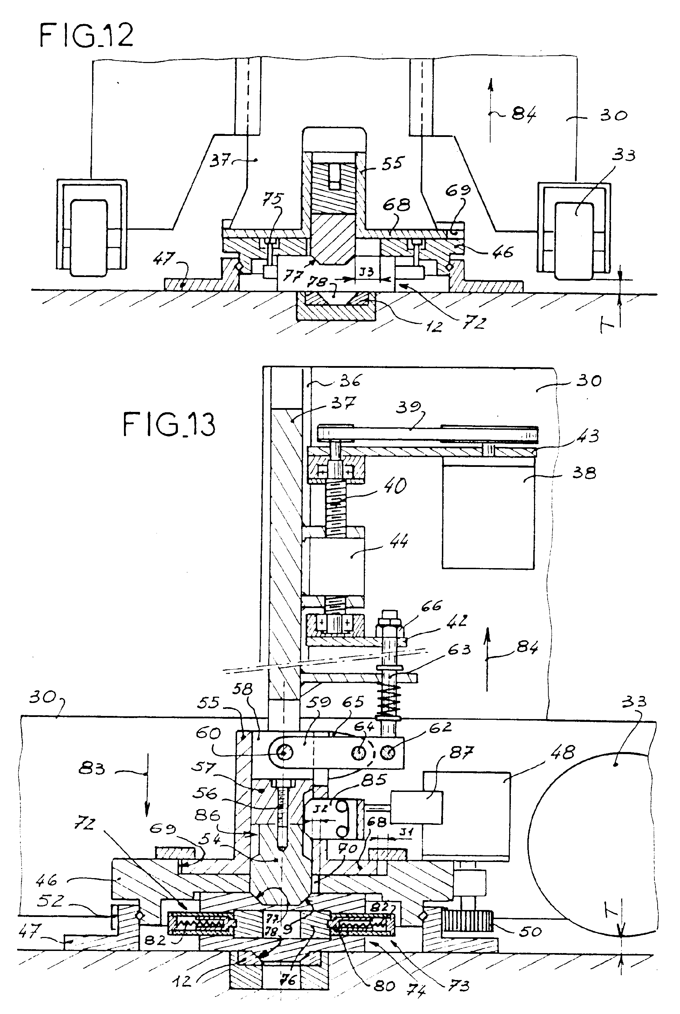

Dans cette forme d'exécution, et comme montré plus en détails figure 13, I'élément centreur mâle 9 est formé à l'extrémité d'un doigt cylindrique 54 monté libre en rotation dans un palier vertical 55. Le doigt 54 est lié avec jeux, par une vis axiale 56, à un arbre 57 monté libre en translation verticale avec lui dans l'alésage interne du palier 55. Cet arbre 57 est muni, à son extrémité supérieure, d'une fente 58 de direction longitudinale pour le passage d'un levier d'actionnement 59. L'extrémité antérieure de ce levier est articulée sur un axe 60, disposé transversalement dans l'arbre 58. L'extrémité postérieure du levier est articulée sur un axe transversal 62, solidaire d'une tige verticale 63. Enfin, le levier est articulé en 64 sur une patte 65 solidaire du palier 55. L'extrémité supérieure de la tige 63 traverse la platine 42 contribuant au positionnement et au maintien de la vis verticale 40 et est munie d'un écrou 64.

Le palier 55 est intercalé entre le coulisseau 37 et le plateau 46. Il est lié au coulisseau 37, par exemple par des soudures 67 visibles à la figure 7. Il est solidaire d'une embase 68, de forme rectangulaire, qui est montée coulissante dans une glissière 69 du plateau 46.

Dans cette forme d'exécution, l'embase 68 et la glissière 69 sont disposées de manière à tolérer un coulissement relatif entre le palier 55 et le plateau 46 suivant une direction qui est transversale, c'est à dire qui est perpendiculaire à la trajectoire de déplacement longitudinal du chariot. Si besoin est, et comme cela sera expliqué plus loin, l'embase 68 est montée dans la glissière 69 avec un jeu longitudinal, représenté schématiquement par J1 à la figure 13. Lorsque ce jeu longitudinal J1 est prévu entre l'embase et le plateau, un jeu J2, de valeur au moins égale, est prévu longitudinalement entre le doigt 54 et l'alésage 70 ménagé dans le plateau 46 pour le passage de ce doigt. La figure 12 montre d'ailleurs que cet alésage 70 est oblong transversalement de façon à aménager un jeu transversal J3 plus grand entre le doigt 54 et le plateau 46.

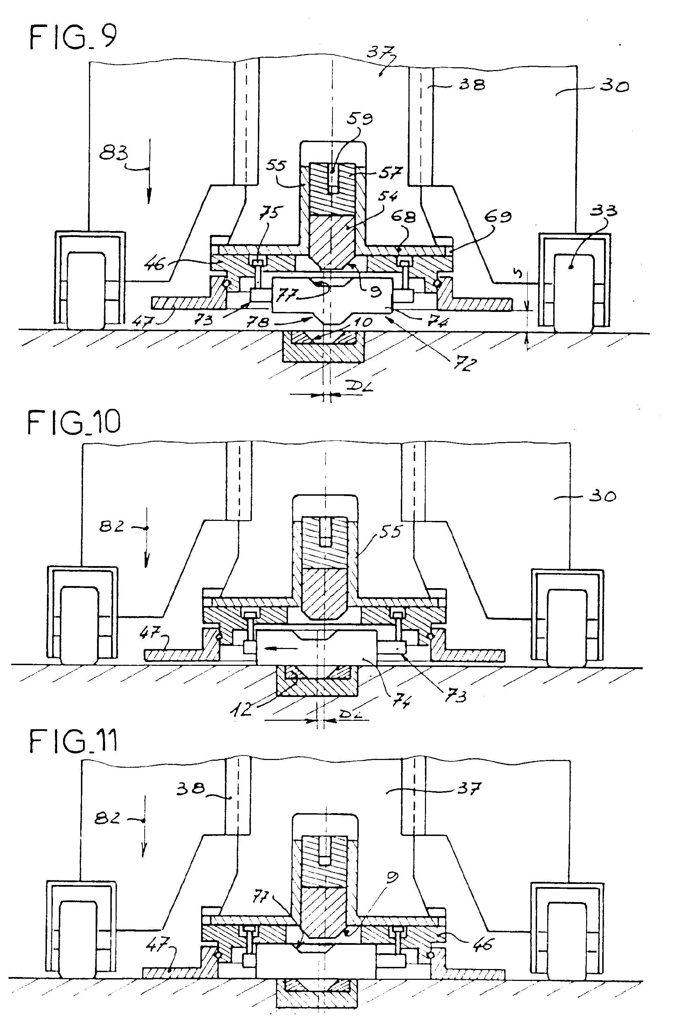

Dans cette forme d'exécution, le doigt centreur 54 est associé à un ensemble de précentrage, désigné de façon générale par 72, et composé d'un disque de portage 73 et d'un noyau de précentrage 74. Le disque de portage est disposé au-dessous et à l'intérieur du plateau 46 auquel il est lié par des vis verticales 75 visibles aux figures 9 à 12. En pratique, il est pendu par ces vis de manière à posséder une possibilité de déplacement vertical par rapport à ce plateau.

Le noyau de précentrage 74 est composé, comme montré plus en détails à la figure 13, de deux éléments, respectivement supérieur et inférieur, liés l'un à l'autre en enserrant entre eux un noyau central 76. Les parties supérieures et inférieures du noyau sont montées avec possibilité de coulissement, dans le plan horizontal, par rapport au plateau de portage 73. L'élément supérieur du noyau de précentrage est muni d'une empreinte de précentrage 77, tandis que l'élément inférieur de ce noyau est muni d'un nez de précentrage 78. L'empreinte 77 et le nez 78 ont, bien entendu, les mêmes forme et dimensions que les empreintes 10 et centreur 9 et sont positionnés de la même façon que la forme pyramidale du centreur 9 du doigt de centrage.

Enfin, la figure 13 montre que le disque 73 comporte des logements radiaux au moins au nombre de trois, pour des poussoirs de rappel 80 prenant appui, sous l'action de ressorts de compression 82, sur la douille centrale 76 emprisonnée entre les deux éléments du noyau de précentrage 74.

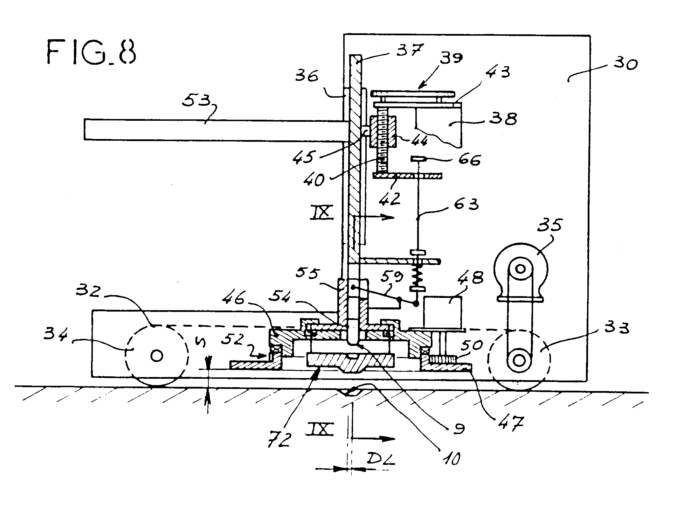

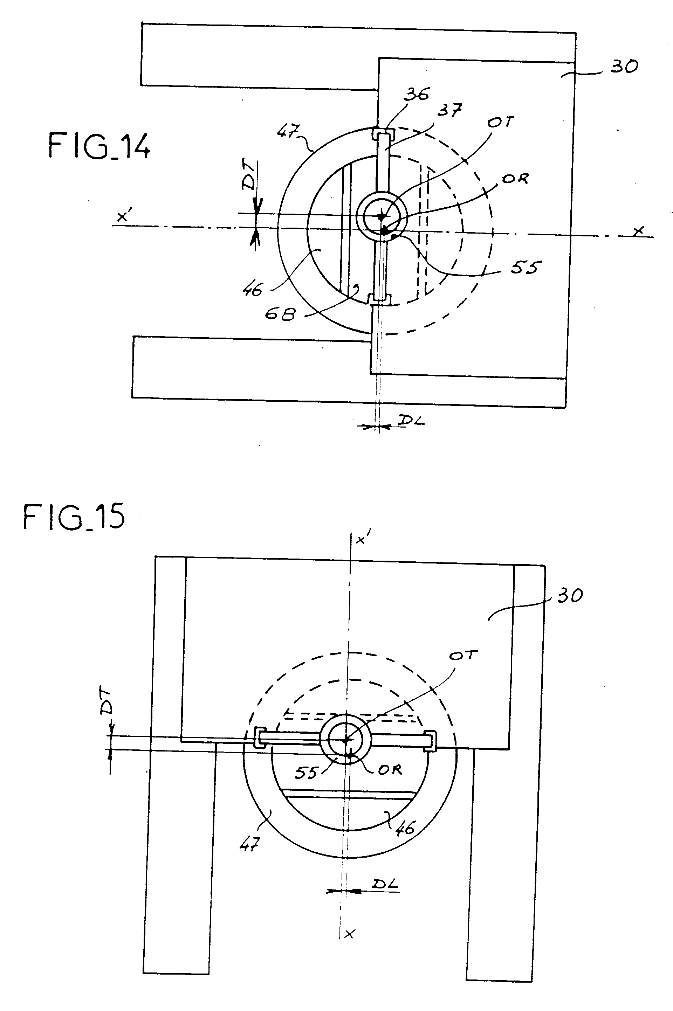

Lorsque le chariot est en position de transport, et comme le montrent les figures 8 et 9, la couronne 57 est éloignée du sol d'une distance S, ayant une valeur de l'ordre de 50 mm, l'ensemble de précentrage 72 pend sous le plateau 46 sans être en contact avec le sol, le levier 59 d'actionnement du doigt 54 est incliné et tend à soulever ce doigt par rapport au palier 55 et la tige 63 est en position telle que son écrou 66 n'est pas en contact avec la platine 42. Lorsque le chariot arrive dans une zone de positionnement, et plus précisément lorsqu'il est arrêté au-dessus de cette zone, son axe vertical réel, représenté par le point OR à la figure 14, est décalé par rapport à l'axe vertical théorique représenté par le point OT à la figure 14. Ces décentrages dépendent de la dérive transversale DT et de la dérive longitudinale DL. A la figure 14, la dérive longitudinale DL est plus faible que la dérive transversale DT pour mettre en évidence qu'il est possible, dans la phase de décélération avant arrêt, de régler cette dérive en jouant sur la durée d'alimentation des moyens provoquant le déplacement longitudinal du chariot.

Pour procéder au repositionnement du chariot par rapport à l'axe de référence parfaitement délimité par l'empreinte 10 de la bague 12 disposée au-dessous du chariot, il suffit, comme dans les formes d'exécution précédentes, de commander le déplacement vertical vers le bas, dans le sens de la flèche 83, du doigt de centrage 9, donc du coulisseau 37 qui le porte.

Dans un premier temps, et comme montré à la figure 10, le doigt de précentrage 78 s'engage dans l'empreinte 10 et se positionne librement grâce au montage flottant du noyau de précentrage 74 par rapport au disque de portage 73. La figure 10 met bien en évidence que ce précentrage s'effectue alors même que la couronne 47 n'est pas encore en appui avec le sol.

Dans une seconde phase, montrée à la figure 11, la couronne 47 vient en appui sur le sol et permet ainsi au plateau 46 de prendre appui sur l'ensemble de précentrage 72, qui est ainsi calé et rendu solidaire du plateau 46 et de la couronne 47.

Dans une phase suivante, et grâce au maintien en rotation de la vis 40 coopérant avec l'écrou 44 du coulisseau 37, et en raison de l'impossibilité pour le coulisseau de continuer son mouvement vers le bas, c'est l'ensemble du châssis qui est déplacé verticalement vers le haut dans le sens de la flèche 84 de figure 12, en provoquant, ainsi, le soulèvement des moyens entrainant en rotation le châssis, à savoir les chenilles 32 avec leurs roues d'entrainement 33 et leurs roues de renvoi 34. A la fin de ce mouvement, et comme le montrent les figures 12 et 13, les moyens d'entrainement en translation sont soulevés du sol d'une valeur T, qui est comprise entre 5 et 10 mm.

La figure 13 montre que, durant ce mouvement d'élévation du châssis, la platine 42 vient en contact avec l'écrou 66 de la tige 63 et exerce ainsi sur cette tige, un mouvement de traction dans le sens de la flèche 84. Par le levier inter appui 59, ce mouvement est transmis en sens inverse, c'est à dire dans le sens de la flèche 83 et avec multiplication, au doigt 54. Il en résulte que le centreur 9 de ce doigt vient en contact avec l'empreinte de précentrage 77 qui, en raison de sa disposition en coïncidence avec la verticale théorique, est décentrée par rapport à l'axe vertical réel du coulisseau et en conséquence avec celui du châssis du chariot. Durant ce mouvement vertical du doigt centreur 54, les faces de l'empreinte de précentrage 77 se comportent comme les faces de l'empreinte 10 dans les formes d'exécution précédentes, et guident le doigt de centrage 9 de façon, qu'en fin de mouvement, coïncident les axes, respectivement, théorique et réel, du châssis 30. Ce recentrage de l'axe du chariot est rendu possible, transversalement, par le coulissement de l'embase 68 du palier 55 par rapport au plateau et, longitudinalement, par un autre coulissement permis par les jeux J1 et J2.

A la fin de cette opération, et comme le montre la figure 14, l'ensemble du chariot est correctement positionné sur l'axe théorique représenté par le point OT, à l'exception de la couronne 47, du plateau 46 et de l'ensemble de précentrage 72 qui, lui, reste centré sur le point OR.

Si le positionnement est effectué uniquement pour corriger la dérive du chariot, à un point de positionnement intermédiaire d'une trajectoire longitudinale longue, il est possible içi, de ramener le chariot en contact avec le sol et de ramener l'ensemble du dispositif de centrage dans sa position de transport représentée aux figures 8 et 9. Par contre, si ce positionnement est effectué dans une zone où le chariot doit être soumis à un changement de trajectoire, c'est à dire à une rotation, il est alors procédé avec le chariot dans la position représentée à la figure 13, à la mise en rotation de ce chariot au moyen du moteur 48. Dans ces conditions, la couronne 47 étant en appui sur le sol, la rotation du pignon 50 provoque, par engrènement de sa denture avec celle 52 de cette couronne, la rotation de l'ensemble du chariot par rapport à cette couronne, à l'exception du doigt 54 et de l'ensemble de précentrage 72. Il faut ici repréciser que le doigt 54 est monté libre en rotation par rapport à l'arbre 57 qui, lui, est entrainé par le mouvement de rotation.

Lorsque l'ensemble a pivoté de l'angle voulu, par exemple de 90° comme montrée à la figure 15, il peut être procédé à la dépose du chariot sur le sol et au retour du dispositif de positionnement à sa position de transport.

Avantageusement, et pour assurer la précision angulaire de la rotation, le doigt de centrage 9-54 est associé à des moyens d'indexation qui, dans la forme d'exécution représentée à la figure 13, sont constitués par un doigt d'indexation 85 monté coulissant dans un logement radial du palier 55 et apte à coopérer avec des canelures longitudinales 86 du doigt 54. Bien entendu, ces canelures 86 sont réparties sur le doigt avec un espacement angulaire précis et ont une section transversale de forme générale triangulaire de façon que leurs faces latérales assurent un centrage des faces correspondantes du doigt 85. Ce doigt 85 est relié à des moyens 87 aptes à le déplacer en translation entre une position d'effacement et une position d'indexation. Ces moyens constitués, par exemple par un vérin électrique, sont portés par l'embase 68, de manière à rester solidaires des déplacements de celle-ci.

La figure 15 montre qu'après rotation et remise en position de transport du dispositif de positionnement, si l'ensemble de précentrage 72 peut reprendre une position centrée par rapport au plateau 46 grâce au poussoir 80 et au ressort 82, ce plateau 46 et la couronne 47 conservent leur position d'origine, c'est à dire restent centrés autour de l'axe correspondant au point OR à la figure 15, alors que l'ensemble du chariot est centré sur l'axe correspondant au point OT à cette même figure. Cela n'est pas gênant puisque, d'une part, la couronne 47 et le plateau 46 qui la porte, sont montés coulissants par rapport au reste du châssis 30 du dispositif et que, d'autre part, ils n'ont qu'une fonction d'appui sur le sol et d'entrainement en rotation du châssis. La figure 15 montre d'ailleurs que, grâce à la rotation du chariot, le décentrage résiduel du plateau 46 et de la couronne 47, c'est à dire le décentrage que présenteront ces éléments sur la nouvelle trajectoire du chariot et lors de la prochaine opération de positionnement, sera sans effet sur la précision de ce nouveau positionnement, puisque le décentrage le plus important, de valeur DT est situé sur l'axe longitudinal de la nouvelle trajectoire, donc sur l'axe où la dérive est plus facile à corriger en fonctionnement, et que le décentrage transversal de valeur DL a la valeur la plus faible et en tous cas inférieure à la dérive attendue.

De toute façon, la valeur de la course radiale de réglage du positionnement CR à la figure 3, correspondant à la différence entre les dimensions radiales extrêmes du doigt centreur 9 ou de l'empreinte 10, est toujours supérieure à la valeur maximale acceptable de la plus grande dérive, transversale ou longitudinale, mesurée à l'arrêt après déplacement longitudinal du chariot., Par exemple si la dérive transversale maximale est de 40 mm, la valeur de CR sera de 50 mm.

Il ressort de ce qui précède que le dispositif selon l'invention permet, aux extrémités ou en tous points de la trajectoire d'un chariot, de positionner aisément et précisément ce chariot par rapport à des axes de référence, et cela indépendamment des dimensions du chariot, de ses moyens de translation, de ses moyens de conduite et de la charge transportée.

Bien que plus particulièrement intéressant pour les chariots autonomes, le dispositif peut aussi être utilisé pour tout autre chariot ou mobile ayant besoin, à un moment de ses déplacements, d'un positionnement précis.

## Revendications

1. Dispositif de positionnement à l'arrêt pour chariot de manutention, chariot du type comportant un châssis (2-30) muni de moyens de réception d'une charge et de moyens (3-3a-32) d'entrainement au moins en translation longitudinale, caractérisé en ce qu'il comprend au moins un doigt centreur (9), qui en forme de pyramide de section polygonale, d'axe vertical et présentant des arêtes convergeant vers le bas, est porté par des moyens (13-15) assurant son calage en rotation par rapport au châssis (2-2a) et est relié à des moyens (14) aptes à le déplacer entre une position de transport, dans laquelle il est au-dessus du sol, et une position de positionnement, dans laquelle il est engagé dans une empreinte (10) de mêmes formes et dimensions que lui et ménagée dans une bague (12) calée dans le sol, cette empreinte (10) étant positionnée de manière que son axe vertical passe par l'intersection des axes longitudinaux et transversaux d'un point de référence de la trajectoire théorique du chariot et qu'au moins l'une de ses faces (10a) soit perpendiculaire à cette trajectoire théorique.

2. Dispositif selon la revendication 1, caractérisé en ce que les parties complémentaires du doigt centreur (9) et de l'empreinte (10) ont chacune la forme d'une pyramide tronquée de section carrée.

3. Dispositif selon l'une quelconque des revendications 1 et 2, caractérisé en ce qu'il comprend, d'une part, des moyens (20) liés au châssis (2a) pour assurer, dans la phase de positionnement, un déplacement vertical vers le haut au moins du châssis (2a) et de ses moyens (3a) d'entrainement en translation longitudinale, et, d'autre part, des moyens (C-23) tolérant un déplacement transversal du châssis en position soulevée.

4. Dispositif selon la revendication 3, caractérisé en ce que les moyens assurant les déplacements verrticaux du châssis sont constitués par plusieurs vérins verticaux dont le corps (20) est lié au châssis et dont l'extrémité libre de la tige (21) est munie de moyens de roulement (23) montés à pivot.

5. Dispositif selon la revendication 3, caractérisé en ce que, lorsque les moyens assurant les déplacements verticaux du châssis sont constitués par les moyens assurant sa rotation sur place et comprenant, au moins, un coulisseau (37) mobile dans des glissières verticales (36) du châssis (30), des moyens moteurs (38-40-44) aptes à déplacer ce coulisseau, verticalement et dans les deux sens, un plateau inférieur (46) lié au coulisseau (37) et portant une couronne (47), libre en rotation, liée à des moyens (48-50) d'entrainement en rotation et aptes à venir en appui sur le sol, le doigt centreur (9-54) est monté libre en rotation sur un arbre (57) avec lequel il est monté coulissant dans un palier vertical (55), tandis que, d'une part, le palier (55) précité est interposé entre le coulisseau (37), dont il est solidaire, et le plateau (46) auquel il est lié avec possibilité de translation transversale, au moins dans une direction, que, d'autre part, l'ensemble doigt centreur-arbre coulissant (9-57) est attelé à des moyens (59) aptes à le déplacer verticalement par rapport au palier (55), au moins dans la phase de positionnement du châssis, et que, de plus, le plateau (46) porte un ensemble de précentrage (72) composé d'un disque de portage (73) monté flottant verticalement par rapport au plateau (46), et d'un noyau de précentrage (74), monté flottant radialement par rapport au disque (74) et muni d'un nez inférieur (78) en alignement avec une empreinte supérieure (77), nez et empreinte ayant les mêmes formes, dimensions et dispositions, que le doigt centreur (9).

6. Dispositif selon la revendication 5, caractérisé en ce que le palier (55) est muni d'une embase rectangulaire (68) montée coulissante dans une glissière (69) du plateau (46).

7. Dispositif selon la revendication 6, caractérisé en ce que l'embase (68) est montée dans la glissière (69) avec possibilité de translation, perpendiculairement à sa direction de coulissement dans cette glissière.

8. Dispositif selon l'une quelconque des revendications 6 et 7, caractérisé en ce que, avec un chariot muni de moyens de translation longitudinale non directifs, la glissière (69) du plateau (46) est disposée transversalement à l'axe longitudinal du chariot.

9. Dispositif selon l'une quelconque des rvendications 5 à 8, caractérisé en ce que le disque de portage (73) de l'ensemble de précentrage (72) est muni de logements radiaux pour des poussoirs de rappel (80) prenant appui, sous l'action de ressorts de compression (82), sur une douille centrale (76) solidaire du noyau de précentrage (74).

10. Dispositif selon l'une quelconque des revendications 5 à 9, caractérisé en ce que les moyens aptes à déplacer verticalement le doigt de centrage sont constitués, d'une part, par un levier inter-appui (59) monté à pivot sur un axe (64) solidaire du palier (55) et attelé, d'un côté, à l'arbre (57) lié au doigt (9) et, de l'autre côté, à l'extrémité inférieure d'une tige coulissante verticale (63) et, d'autre part, par ladite tige (63) dont l'extrémité supérieure, munie d'un écrou (66), est dans la trajectoire ascendante d'une platine (42) solidaire du châssis (30).

11. Dispositif selon l'une quelconque des revendications 5 à 10, caractérisé en ce que la périphérie du doigt centreur (9-54) est munie de canelures radiales (86), de pas angulaire constant, aptes à coopérer avec un doigt d'indexation radiale (85) qui, monté coulissant radialement dans le palier (55), est lié à des moyens (87) aptes à le déplacer transversalement, en fin de rotation du châssis, autour du doigt centreur (9-54).

## Patentansprüche

1. Einrichtung zur Anhalte-Positionierung für ein Flurförderfahrzeug, wobei das Fahrzeug ein Chassis (2-30) aufweist, welches mit Mitteln zur Aufnahme einer Last und mit Antriebsmitteln (3-3a-32) zumindest für eine Verfahrbewegung in Längsrichtung ausgestattet ist, dadurch **gekennzeichnet**, daß **s**ie zumindest einen Zentrierfinger (9) aufweist, welcher die Form einer Pyramide mit polygonalem Querschnitt und vertikaler Achse hat, die nach unten konvergierende Kanten aufweist, und welcher von Mitteln (13-15) gehalten ist, die dessen Drehsicherung gegenüber dem Chassis (2-2a) gewährleisten, und welcher mit Mitteln (14) verbunden ist, die diesen zwischen einer Transportstellung, bei der er sich oberhalb des Fußbodens befindet, und einer Positionierstellung verstellen können, bei der er in eine Vertiefung (10) mit gleichen Formen und Abmessungen wie seine eigenen eingreift und die in einem im Fußboden befestigten Ring (12) ausgebildet ist, wobei diese Vertiefung (10) so angeordnet ist, daß ihre vertikale Achse durch den Schnittpunkt der Längs- und Querachse eines Referenzpunktes der theoretischen Fahrbahn des Fahrzeuges hindurchgeht, und daß zumindest eine ihrer Flächen (10a) senkrecht zu dieser theoretischen Fahrbahn liegt.

2. Einrichtung nach Anspruch 1, dadurch **gekenn****zeichnet**, daß die komplementären Teile des Zentrierfingers (9) und der Vertiefung (10) jeweils die Form einer abgestumpften Pyramide mit viereckigem Querschnitt haben.

3. Einrichtung nach einem der Ansprüche 1 und 2, dadurch **gekennzeichnet**, daß sie einerseits mit dem Chassis (2a) verbundene Mittel (20) umfaßt, um in der Positionierphase eine vertikale Verstellung zumindest des Chassis (2a) und seiner Antriebsmittel (3a) für die Verfahrbewegung in Längsrichtung nach oben zu bewirken, und andererseits Mittel (C-23), die eine Querverschiebung des Chassis in der angehobenen Position ermöglichen.

4. Einrichtung nach Anspruch 3, dadurch **gekenn****zeichnet**, daß die Mittel, die die vertikalen Verstellungen des Chassis bewirken, aus mehreren vertikalen Stellzylindern gebildet sind, deren Gehäuse (20) mit dem Chassis verbunden ist und bei denen das freie Ende der Kolbenstange (21) mit Rollenelementen (23) ausgestattet ist, die schwenkbar montiert sind.

5. Einrichtung nach Anspruch 3, dadurch **gekenn****zeichnet**, daß dann wenn die die vertikalen Verstellungen des Chassis bewirkenden Mittel durch eine Einrichtung gebildet sind, die dessen Drehung auf der Stelle bewirken und zumindest einen in vertikalen Gleitführungen (36) des Chassis (30) beweglichen Schlitten (37) umfassen, ferner eine Motoranordnung (38-40-44) zum vertikalen Verstellen dieses Schlittens in beiden Richtungen, und eine untere Platte (46), die mit dem Schlitten (37) verbunden ist und einen drehfreien Kranz (47) trägt, welcher mit Mitteln (48-50) für einen Drehantrieb verbunden ist und zur Auflage auf den Fußboden kommen kann, der Zentrierfinger (9-54) drehfrei auf einer Welle (57) montiert ist, mit der zusammen er verschiebbar in einem Vertikallager (55) montiert ist, wobei einerseits das zuvor genannte Lager (55) zwischen dem Schlitten (37), mit dem es fest verbunden ist, und der Platte (46), mit der es mit der Möglichkeit einer Querverschiebung zumindest in einer Richtung verbunden ist, angeordnet ist, andererseits die aus dem Zentrierfinger und der verschiebbaren Welle bestehende Baugruppe (9-57) mit Mitteln (59) gekuppelt ist, die diese gegenüber dem Lager (55) zumindest in der Positionierphase des Chassis vertikal verstellen können, und daß darüber hinaus die Platte (46) eine Vorzentrieranordnung (72) trägt, die aus einer Trageplatte (73) gebildet ist, die gegenüber der Platte (46) vertikal schwimmend montiert ist, und aus einem Vorzentrierblock (74), welcher gegenüber der Scheibe (74) radial schwimmend montiert und mit einer unteren Nase (78) ausgestattet ist, die zu einer oberen Ausnehmung (77) ausgerichtet ist, wobei die Nase und die Ausnehmung die gleichen Formen, Abmessungen und Anordnungen haben wie der Zentrierfinger (9).

6. Einrichtung nach Anspruch 5, dadurch **gekenn****zeichnet**, daß das Lager (55) mit einem rechteckigen Fuß (68) ausgestattet ist, welcher verschiebbar in einer Gleitführung (69) der Platte (46) angeordnet ist.

7. Einrichtung nach Anspruch 6, dadurch **gekenn****zeichnet**, daß der Fuß (68) in der Gleitführung (69) mit der Möglichkeit einer Translationsbewegung senkrecht zu ihrer Verschieberichtung in dieser Gleitführung angeordnet ist.

8. Einrichtung nach einem der Ansprüche 6 und 7, dadurch **gekennzeichnet**, daß bei einem Fahrzeug, welches mit nicht gelenkten Mitteln zum Verfahren in Längsrichtung ausgestattet ist, die Gleitführung (69) für die Platte (46) quer zur Längsachse des Fahrzeuges angeordnet ist.

9. Einrichtung nach einem der Ansprüche 5 bis 8, dadurch **gekennzeichnet**, daß die Trageplatte (73) der Vorzentriereinrichtung (72) mit radialen Aufnahmen für Rückstellstößel (80) ausgestattet ist, die sich unter der Wirkung von Druckfedern (82) an eine zentrale, mit dem Vorzentrierblock (74) fest verbundene Hülse (76) anlegen.

10. Einrichtung nach einem der Ansprüche 5 bis 9, dadurch **gekennzeichnet**, daß die Mittel zur vertikalen Verstellung des Zentrierfingers einerseits durch einen Zwischenstützhebel (59) gebildet sind, welcher schwenkbar auf einer mit dem Lager (55) fest verbundenen Achse (64) gelagert und an einer Seite mit der mit dem Finger (9) verbundenen Achse (57) und an der anderen Seite mit dem unteren Ende eines vertikal verschiebbaren Stößels (63) gekuppelt ist, und andererseits durch diesen Stößel (63), dessen oberes, mit einer Mutter (66) versehenes Ende in der steigenden Bewegungsbahn einer mit dem Chassis (30) fest verbundenen Platine (42) liegt.

11. Einrichtung nach einem der Ansprüche 5 bis 10, dadurch **gekennzeichnet**, daß die Peripherie des Zentrierfingers (9-54) mit radialen Rillen (86) mit konstantem Winkelabstand versehen ist, die mit einem radialen Indexierstift (85) zusammenwirken können, der radial verschiebbar in dem Lager (55) angeordnet und mit Mitteln (87) verbunden ist, die diesen am Ende der Rotationsbewegung des Chassis um den Zentrierfinger (9-54) quer verstellen können.

## Claims

1. A stationary position adjustment device for a handling trolley, the trolley being of the type including a chassis (2-30) provided with means for receiving a load and means (3-3a-32) for driving it at least in longitudinal translation, characterised in that it includes at least one centering projection (9) which is in the form of a pyramid of polygonal section, has a vertical axis and presents downwardly converging stops, is carried by means (13-15) for locking it in rotation with respect to the chassis (2-2a) and is connected to means (14) adapted to displace it between a transport position in which it is above the ground and a positioning position in which it is engaged in a recess (10) having the same shape and dimensions as itself and formed in a ring (12) locked in the ground, this recess (10) being positioned such that its vertical axis passes through the intersection of the longitudinal and transverse axes of a reference point of the theoretical trajectory of the trolley and at least one of its faces (10a) is perpendicular to this theoretical trajectory.

2. A device according to Claim 1, characterised in that each of the complementary parts of the centering projection (9) and the recess (10) has the form of a truncated pyramid of square section.

3. A device according to either of Claims 1 and 2, characterised in that it includes, on the one hand, means (20) connected to the chassis (2a) for effecting, in the positioning phase, a vertical upward displacement of at least the chassis (2a) and of its means (3a) for driving it in longitudinal translation, and, on the other hand, means (C-23) permitting a transverse displacement of the chassis in the raised position.

4. A device according to Claim 3, characterised in that the means for effecting the vertical displacements of the chassis are constituted by several vertical jacks of which the bodies (20) are connected to the chassis and of which the free ends of the rods (21) are provided with pivotally mounted rolling means (23).

5. A device according to Claim 3, characterised in that when the means effecting the vertical displacements of the chassis are constituted by the means effecting its stationary rotation and comprising at least one sliding element (37) movable in vertical slideways (36) of the chassis (30), motor means (38-40-44) adapted to displace the sliding element vertically and in both directions, a lower plate (46) connected to the sliding element (37) and carrying a freely rotatable ring (47) connected to rotational driving means (48-50) and adapted to come to rest against the ground, the centering projection (9-54) is freely rotatably mounted on a shaft (57) with which it is slidably mounted in a vertical bearing (55), whilst, on the one hand, the aforesaid bearing (55) is interposed between the sliding element (37), to which it is connected, and the plate (46) to which it is connected with a possibility of transverse translation, at least in one direction, and, on the other hand, the centring projection-sliding shaft assembly (9-57) is coupled to means (59) adapted to displace it vertically with respect to the bearing (55) at least in the positioning phase of the chassis, and moreover, the plate (46) carries a pre-centring assembly (72) composed of a carrier disc (73) vertically floatingly mounted with respect to the plate (46) and a pre-centering hub (74) radially floatingly mounted with respect to the disc (74) and provided with a lower nose (78) in alignment with an upper recess (77), the nose and recess having the same form, dimensions and arrangement as the centring projection.

6. A device according to Claim 5, characterised in that the bearing (55) is provided with a rectangular base (68) slidably mounted in a slideway (69) of the plate (46).

7. A device according to Claim 6, characterised in that the base (68) is mounted in the slideway (69) with the possibility for translation perpendicularly to its direction of sliding in this slideway.

8. A device according to either of Claims 6 and 7, characterised in that, with a trolley provided with non-directional longitudinal translation means, the slideway (69) of the plate (46) is disposed transversely to the longitudinal axis of the trolley.

9. A device according to any one of Claims 5 to 8, characterised in that the carrier disc (73) of the pre-centering assembly (72) is provided with radial housings for return pushers (80) bearing, under the action of compression springs (82), on a central bush (76) connected to the pre-centering hub (74).

10. A device according to any one of Claims 5 to 9, characterised in that the means adapted to displace the centering projection vertically are constituted, on the one hand, by an inter-bearing lever (59) pivotally mounted on a shaft (64) connected to the bearing (55) and coupled, at one side to the shaft (57) connected to the projection (9) and, at the other side, to the lower end of a vertical sliding rod (63) and, on the other hand, by said rod (63) of which the upper end, provided with a nut (66), is in the ascending trajectory of a platen (42) connected to the chassis (30).

11. A device according to any one of Claims 5 to 10, characterised in that the periphery of the centering projection (9-54) is provided with radial channels (86) of constant angular spacing, adapted to cooperate with a radial indexing projection (85) which, radially slidably mounted in the bearing (55), is connected to means (87) adapted to displace it transversely, at the end of rotation of the chassis, about the centering projection (9-54).
